# DEMANDE DE BREVET EUROPEEN

(11) **EP 0 978 671 A1**
(43) Date de publication de la demande: **09.02.2000**
(21) Numéro de dépôt: 99401945.3
(22) Date de dépôt: 29.07.1999
(51) Int. Cl.: F16H 59/02, B60T 7/10

(54) **Dispositif de commande de frein de parking associé au levier d'actionnement d'une boîte de vitesses**

(30) Priorité: 05.08.1998 FR 9810047
(71) Demandeur: RENAULT, 92109 Boulogne-Billancourt (FR)
(72) Inventeur: Baerd, Sébastien, 75015 Paris (FR)

(57) **Abrégé**

Ce dispositif comporte un corps cylindrique (2) fixé sur le levier (L) près du pommeau (PO). Un capteur de position axiale (4) et fixé dans ce corps. Une douille (9) pourvue de pattes de préhension (10) peut être soulevée en direction du pommeau (PO), par exemple avec l'index et le majeur de la main qui actionne le levier (L).

Ce mouvement est suivi par le capteur (4) dont le signal de position permet de commander l'organe fonctionnel (E). Ce dernier est de préférence le frein de parking du véhicule équipé de ce dispositif.

## Description

La présente invention est relative à un dispositif de commande manuelle d'un organe fonctionnel utilisable notamment dans un véhicule automobile.

Plus particulièrement, l'invention concerne un dispositif de commande manuelle conçu pour être associé à un levier d'actionnement par lequel une fonction peut être enclenchée ou déclenchée, autre que celle assurée par l'organe fonctionnel commandé par ce dispositif de commande manuelle.

Pour fixer les idées, dans le cadre de l'application de l'invention à un véhicule automobile, le levier d'actionnement peut être le levier de changement de rapports de la boîte de vitesses et l'organe fonctionnel peut être l'ensemble assurant la commande d'un frein motorisé de parking du véhicule automobile.

Dans le cadre de l'application particulière qui vient d'être citée, il est déjà connu, par exemple par le brevet US 5 630 489, de motoriser le frein de parking et de commander son serrage ou son desserrage par l'intermédiaire du levier de changement de rapports associé à la boîte de vitesses. Ce levier est pourvu, outre les positions de changement habituelles commandant la boîte de vitesses, d'une position supplémentaire de serrage du frein de parking.

Cette disposition connue présente l'avantage d'être ergonomique car elle associe la commande du frein de parking directement au levier de changement de la boîte de vitesses, de sorte que le conducteur trouvera en toute circonstance facilement la commande de frein, même dans des conditions de freinage d'urgence, le levier étant placé toujours à un endroit de l'habitacle favorable du point de vue de l'ergonomie.

Cependant, cette disposition présente l'inconvénient de comporter une position particulière de freinage parmi les autres positions actionnant la boîte de vitesses, de sorte qu'en cas de freinage d'urgence, le conducteur doit quitter le rapport de vitesses sur lequel la boîte était engagée, privant alors le véhicule du frein moteur. Ceci s'oppose à la réglementation en vigueur.

Enfin, cette disposition connue ne permet de commander le frein de parking que par tout-ou-rien, aucun serrage de force intermédiaire n'étant possible. Or, fréquemment, par exemple si le véhicule est arrêté sur terrain plat, on peut se contenter d'un serrage faible du frein, un dosage de la force de serrage étant donc souhaitable.

D'autres solutions connues, par exemple celle décrite dans le document DE 4 421 088, font appel à un organe de commande du frein de parking motorisé, distinct du levier de vitesses, en associant à cet organe supplémentaire un commutateur électrique dont la fermeture ou l'ouverture provoque l'actionnement d'une électrovanne ou analogue agissant sur le frein de parking.

Du point de vue de l'ergonomie, cette disposition connue est moins favorable que la précédente, puisque deux organes d'actionnement sont nécessaires prévus forcément à deux endroits distincts de l'habitacle. En outre, dans ce cas également, l'actionnement du frein de parking se limite à une commande par tout-ou-rien.

L'invention a pour but de remédier à ces inconvénients de la technique antérieure.

Elle a donc pour objet un dispositif de commande manuelle d'un organe fonctionnel utilisable notamment dans un véhicule automobile et associé à un levier destiné à l'actionnement d'une fonction autre que celle assurée par ledit organe fonctionnel, ledit levier se présentant généralement sous la forme d'une tige à l'une des extrémités de laquelle est montée un organe de manipulation tel qu'un pommeau pour la préhension dudit levier, ce dispositif étant caractérisé en ce qu'il comprend un support de forme générale cylindrique solidaire de ladite tige et coaxiale à celle-ci, un organe de commande monté coulissant et rotatif sur ledit support et pourvu de moyens de préhension agencés et conformés pour permettre l'exécution manuelle de ses mouvements de coulissement et de rotation à l'aide d'une main posée sur ledit organe de manipulation, en un capteur de position agencé pour fournir un signal représentatif de la position relative axiale dudit support et dudit organe de commande, ce capteur étant connecté audit organe fonctionnel pour en déterminer un état en fonction de ce signal, et des moyens de verrouillage unidirectionnel pour bloquer au moins une position axiale dudit organe de commande lorsque ce dernier est rapproché axialement dudit organe de manipulation, lesdits moyens de verrouillage étant débrayables par un mouvement angulaire dudit organe de commande.

Selon d'autres particularités de l'invention :
- ledit capteur de position est logé dans ledit support et comporte un curseur mobile axialement pour déterminer ledit signal de position, ce curseur étant couplé audit organe de commande pour en suivre les mouvements axiaux par rapport audit support,
- ledit capteur de position est un potentiomètre sur le curseur duquel peut être prélevée une tension représentant ledit signal de position,
- lesdits moyens de verrouillage unidirectionnel comprennent un cliquet articulé sur ledit support et une crémaillère prévue axialement sur ledit organe de commande pour coopérer avec ledit cliquet, celui-ci étant sollicité élastiquement à pénétrer dans la denture de ladite crémaillère, et le profil des dents de ladite crémaillère est prévu pour autoriser l'échappement du cliquet par un mouvement de rotation limité dudit organe de commande par rapport audit support,
- ledit support présente un corps de forme générale cylindrique monté coaxialement sur ledit levier et ledit organe de commande est une douille entourant coaxialement ledit corps cylindrique,
- un unique organe élastique de rappel est prevu pour ramener ladite douille dans sa position de départ lorsqu'elle a été déplacée en direction dudit organe de manipulation ou autour de son axe pour le débrayage desdits moyens de verrouillage unidirectionnel,
- ledit levier est le levier de changement de rapports de la boîte de vitesses d'un véhicule automobile et ledit organe fonctionnel est le frein de parking motorisé de ce véhicule.

D'autres caractéristiques et avantages de l'invention apparaîtront au cours de la description qui va suivre, donnée uniquement à titre d'exemple et faite en se référant aux dessins annexés sur lesquels:
- la figure 1 montre une vue en perspective d'une partie du poste de conduite d'un véhicule automobile, et notamment le levier de changement de rapports de la boîte de vitesses auquel est associé un dispositif de commande manuelle selon l'invention;
- la figure 2 montre en vue extérieure le levier de changement de rapports du poste de conduite représenté sur la figure 1, ainsi que par une coupe axiale le dispositif de commande manuelle selon l'invention;
- les figures 3 et 4 montrent, par des vues analogues à celle de la figure 2, deux positions extrêmes pouvant être occupées par le dispositif de commande manuelle selon l'invention, la coupe de la figure 3 étant faite selon la ligne III-III de la figure 6 et celle de la figure 4 selon la ligne IV-IV de la figure 5;
- les figures 5 et 6 sont des vues en plan du dispositif de commande manuelle, la plaque de protection de celui-ci étant ôtée et les vues représentant respectivement une position de réglage du frein de parking et une position de desserrage de ce dernier.

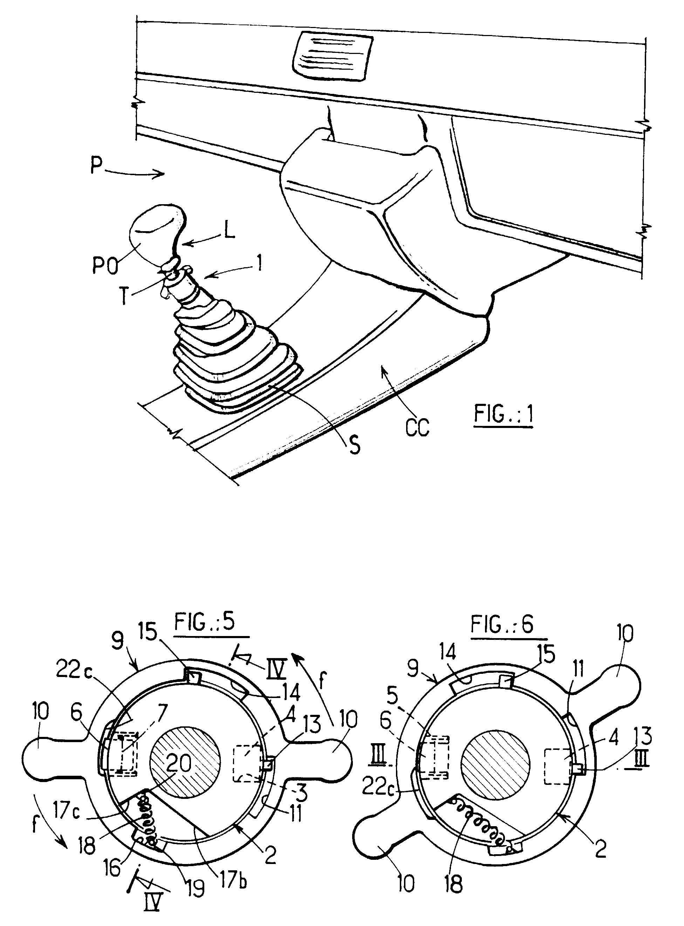

La figure 1 représente en perspective un poste de conduite P d'un véhicule automobile, avec sa console centrale CC, sur laquelle est installé un levier de changement de rapports L actionnant une boîte de vitesses. A ce levier L est associé un dispositif de commande manuelle selon l'invention, désigné globalement par la référence 1. Il comporte en outre un organe de manipulation PO monté à son extrémité supérieure et se présentant de préférence sous la forme d'un pommeau.

Toutefois, il convient de noter que la figure 1 n'illustre qu'un exemple parmi les multiples applications possibles de l'invention, exemple dans lequel le dispositif de commande manuelle est utilisé pour actionner le frein de parking motorisé d'un véhicule automobile et l'organe d'actionnement auquel ce dispositif est associé, est le levier de changement de rapports de la boîte de vitesses. Toute application dans laquelle il s'agit de fournir un dispositif de commande manuelle devant être utilisé de façon ergonomique et conjointement avec un organe d'actionnement se présentant sous la forme d'un levier, que cela soit dans le domaine automobile ou dans un autre domaine, est donc expressément comprise dans le cadre de la présente invention.

Le levier L est gainé par un soufflet S dans sa partie inférieure, étant entendu que ce levier est couplé à la boîte de vitesses de la manière habituelle. Le levier peut être muni de la commande de marche arrière, comportant juste en-dessous du pommeau PO une palette relevable (non représentée) pour permettre le déverrouillage de la marche arrière. On notera que dans le cas représente, le levier de changement de rapports L est destiné a l'actionnement d'une boîte manuelle, mais l'invention s'applique tout aussi bien à un levier d'actionnement d'une boîte automatique dont la position de parking pourrait être remplacée par le dispositif de commande manuelle selon l'invention.

Dans le cas représenté, ce dernier est situé avantageusement entre le pommeau PO et le soufflet S afin d'assurer une disposition particulièrement favorable sur le plan ergonomique.

Il comprend un manchon support 2 ayant une forme générale cylindrique et fixé coaxialement à la tige T du levier de changement de rapports L, en étant aligné sur l'axe longitudinal X-X de ce dernier. Selon une variante, le manchon support pourra être formé en une seule pièce avec le levier L.

Le manchon support 2 présente un logement latéral 3 pratiqué dans sa paroi cylindrique et orienté généralement selon une génératrice du corps cylindrique de ce manchon. La forme de ce logement est adaptée à celle d'un capteur de position 4 qui y est disposé.

Dans une position à peu près diamétralement opposée, le manchon support présente également un alvéole 5 dans lequel est monté un cliquet 6 articulé autour d'une broche fixe 7, l'arête active du cliquet étant sollicité vers l'extérieur au delà de la surface cylindrique du manchon 2, grâce à un ressort 8.

Un organe de commande 9 se présentant ici sous la forme d'une douille de commande coaxiale est monté à la fois coulissante et rotative sur le manchon support 2; cette douille 9 présente la même longueur axiale que ce dernier. son extrémité supérieure présente deux pattes de préhension 10 diamétralement opposées et d'une forme ergonomique telle qu'elles puissent facilement être saisies respectivement par deux doigts de la main (l'index et le majeur par exemple), lorsque celle-ci repose par la paume sur le pommeau PO du levier de changement L. Dans le même but, on détermine à une valeur convenable la distance d'entre le sommet du pommeau PO et la surface supérieure de la douille 9.

La surface cylindrique interne de la douille 9 présente plusieurs évidements.

Un premier (11) de ces évidements est une rainure axiale s'étendant sur pratiquement toute la hauteur de la douille 9 et définissant à son extrémité inférieure une surface de butée radiale 12. A son extrémité opposée, cette rainure axiale s'ouvre à la surface d'extrémité annulaire de la douille 9. La butée radiale 12 coopère avec un ergot d'actionnement 13 du capteur de position 4. Dans le mode de réalisation représenté, ce dernier est un potentiomètre dont la partie résistive (non représentée) est montée longitudinalement dans le logement 3 et le long de laquelle peut coulisser un curseur (également non représenté) couplé à l'ergot d'actionnement 13. De la sorte, la position du curseur du potentiomètre traduit la position de la douille 9 par rapport au manchon support 2, cette position pouvant à son tour être représentée par une tension électrique présente entre le curseur et l'une des extrémités de la partie résistive du potentiomètre. Il est à noter que le capteur 4 tel que l'on vient de le décrire, n'est qu'un exemple parmi de nombreuses capteurs de position connus en soi que l'on pourrait utiliser pour fournir un signal de commande représentatif de la position de la douille 9 par rapport au manchon support 2. Par ailleurs, l'étendue périphérique de la rainure 11 autorise un certain débattement angulaire de l'ergot 13 par rapport à la douille 9, dans un but qui apparaîtra par la suite. Enfin, le curseur 13 est sollicité elastiquement contre la surface du butée 12, par un ressort (non représenté) interne au capteur 4.

Le second évidement pratique dans la paroi interne de la douille 9 est une rainure axiale allongée 14 dont les parois longitudinales sont parallèles entre elles et à l'axe X-X. Cette rainure 14 coopère avec un taquet 15 solidaire du manchon support 2 près de son extrémité supérieure, et assurant la limitation du débattement de la douille 9, tant axialement qu'en rotation par rapport à ce dernier.

Le troisième évidement de la douille 9 est un dégagement 16 prévu dans ses surfaces supérieure et latérale interne sur une hauteur relativement faible.

Le dégagement 16 est prévu en face d'un évidement 17 pratiqué dans le manchon support 2. Cet évidement présente un plat radial 17a et deux parois radiales rentrants 17b et 17c faisant un angle légèrement obtus entre elles (figure 5).

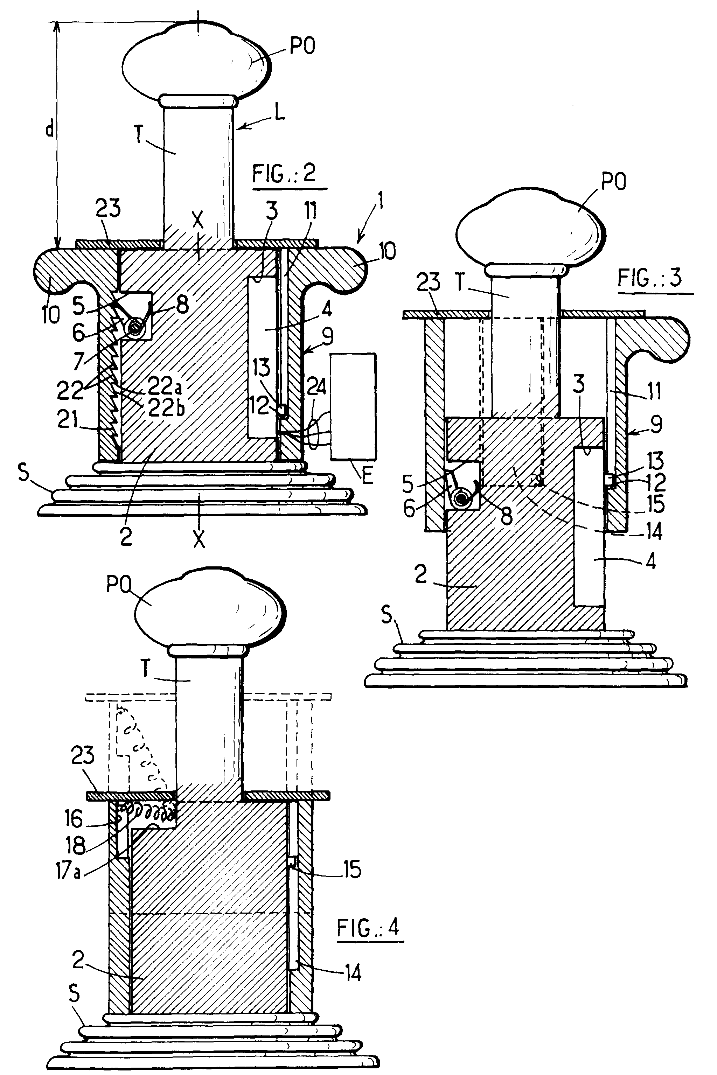

Le dégagement 16 et l'évidement 17 sont destinés au débattement d'un ressort hélicoïdal de rappel 18 accroché par l'une de ses extrémités à un oeilleton 19 prévu dans le dégagement 16 et par son extrémité opposée à un oeilleton semblable 20 disposé dans l'évidement 17, ces oeilletons étant respectivement solidaires de la douille 9 et du manchon support 2. Le ressort de rappel 18 sollicite la douille 9 dans une position inférieure de repos représentée sur les figures 2 et 5.

Dans cette position de repos de la douille 9, le cliquet 6 se trouve en face d'une partie haute d'une crémaillère 21 formant avec le cliquet 6 des moyens de verrouillage unidirectionnel et ce sens qu'ils bloquent la descente de la douille 9 après que celle-ci ait été rapprochée du pommeau PO. Toutefois, comme on le verra par la suite, les moyens de verrouillage sont débrayables par rotation autour de son axe X-X, Pour autoriser la descente de la douille 9. La crémaillère est ménagée dans le paroi interne de la douille 9 et s'étend axialement. Les sommets des dents 22 de cette crémaillère sont à fleur de la paroi interne de la douille 9. La forme des dents 22 rappelle celle des dents d'une scie, chaque dent présentant un flanc 22a s'étendant à peu près dans un plan radial de manière à former butée pour le cliquet 6 et un flanc 22b oblique par rapport à l'axe X-X et permettant l'échappement du cliquet 6. En outre, à l'un des ses côtés latéraux, le profil de la crémaillère 21 évolue graduellement dans le sens périphérique en 22c (figure 5) de telle manière que les alvéoles qu'elle forme dans la paroi interne de la douille diminuent progressivement de volume pour finalement se raccorder à la surface interne de la douille. Cette disposition permet de repousser le cliquet 6 hors de la crémaillère 21 par une rotation relative de la douille 9 et du manchon support 2 autour de l'axe X-X (sens des flèches f sur la figure 5).

Une rondelle radiale d'enjoliveur 23 est fixée sur la surface supérieure annulaire de la douille 9 en entourant la tige T du levier L; elle permet de limiter la course vers le bas de cette douille.

Le capteur de position 4 envoie le signal de position de la douille 9 à un ensemble E de frein de parking motorisé par l'intermédiaire de fils de connexion 24. L'ensemble E peut être tout type de frein de parking motorisé conçu pour permettre le serrage et le desserrage du frein en fonction du signal de position engendré, la force de serrage étant de préférence modulable en fonction de l'évolution de ce signal. De tels freins de parking sont connus en soi et n'ont pas besoin d'étre décrits ici.

Le fonctionnement de ce dispositif de commande manuelle est le suivant.

La position du dispositif de commande représentée sur la figure 2, correspond au frein de parking desserré, le véhicule étant donc normalement en mouvement. Le levier de changement de rapports L peut être manipulé sans aucune interférence avec le fonctionnement du frein de parking.

Lorsque le frein de parking doit être serré, que ce soit en situation normale à l'arrêt du véhicule (point mort) ou en situation d'urgence (l'un quelconque des rapports est engagé), le conducteur, en ayant la main posée sur le pommeau PO conformément à un geste habituel de conduite, saisit les pattes de préhension 10, par exemple avec son index et son majeur et soulève la douille 9 en la rapprochant du pommeau PO sans toutefois en opérer une rotation par rapport à l'axe X-X. Ce faisant, il provoque le sautillement du cliquet 6 sur les dents de la crémaillère 21, pendant que l'ergot d'actionnement 13 amène le curseur du capteur 4 à se déplacer.

Il en résulte une activation de l'ensemble E de freinage de parking dans le sens d'un serrage de ce frein. Dès que le conducteur estime avoir obtenu la force de freinage souhaitée, il cesse de soulever la douille 9. Le cliquet 6 se bloque sur le flanc 22a de la dent 22 sur laquelle il s'est arrêté, immobilisant ainsi la douille 9 sur la position qui a déterminé la force de freinage. Le ressort de rappel 18 se tend, mais il est encore incapable de rappeler la douille 9 en raison du blocage assuré par le cliquet 6. Le frein de parking demeure donc serré à la force choisie par le conducteur. On notera que cette manoeuvre peut être exécutée dans toutes les positions du levier L.

Pour desserrer le frein, la main du conducteur étant dans la même position habituelle de conduite, la douille 9 est entraînée en rotation (dans le sens anti-horaire, flèches f de la figure 5) jusqu'à ce que le taquet 15 vienne buter contre la paroi longitudinale correspondante de la rainure 14. Il en résulte le dégagement du cliquet 6 hors de la denture grâce à la forme du profil latéral particulier 22c des alvéoles délimités par la crémaillère 21. Cette position correspond à celle de la figure 3. L'ergot d'actionnement 13 reste encore immobile grâce à l'étendue périphérique de la rainure 11. Le conducteur relâchant désormais la douille 9, le ressort de rappel 18 la ramène par rotation et coulissement dans la position basse de desserrage du frein.

Plusieurs variantes de construction du dispositif de commande manuelle sont possibles sans sortir du cadre de l'invention.

C'est ainsi par exemple que l'agencement des moyens de verrouillage pourrait être inversé, le cliquet étant prévu sur la douille 9 et la crémaillère sur le manchon support 2, avec inversion concomitante de l'orientation des dents 22.

Les pattes de préhension 10 pourraient également avoir une autre forme ergonomique facilitant les mouvements axiaux et rotatifs de la douille 9.

Enfin l'invention englobe aussi la variante moins évoluée dans laquelle les moyens de verrouillage n'autoriseraient le blocage de la douille 9 que dans une seule position active proche du pommeau PO, ce qui reviendrait à une commande par-tout-ou-rien du frein de parking. Même dans cette solution, les avantages d'ergonomie et de liberté de mouvement du levier seraient conservés.

## Revendications

1. Dispositif de commande manuelle d'un organe fonctionnel (E) utilisable notamment dans un véhicule automobile et associé à un levier (L) destiné à l'actionnement d'une fonction autre que celle assurée par ledit organe fonctionnel, ledit levier (L) se présentant généralement sous la forme d'une tige (T) à l'une des extrémités de laquelle est montée un organe de manipulation tel qu'un pommeau (PO) pour la préhension dudit levier, ce dispositif étant caractérisé en ce qu'il comprend un support (2) de forme générale cylindrique solidaire de ladite tige (T) et coaxiale à celle-ci, un organe de commande (9) monté coulissant et rotatif sur ledit support (2) et pourvu de moyens de préhension (10) agencés et conformés pour permettre l'exécution manuelle de ses mouvements de coulissement et de rotation à l'aide d'une main posée sur ledit organe de manipulation (PO), et un capteur de position (4) agencé pour fournir un signal représentatif de la position relative axiale dudit support (2) et dudit organe de commande (9), ce capteur (4) étant connecté audit organe fonctionnel (E) pour en déterminer au moins un état en fonction de ce signal, et des moyens de verrouillage unidirectionnel (6, 21) pour bloquer au moins une position axiale dudit organe de commande (9) lorsque ce dernier est rapproché axialement dudit organe de manipulation (PO), lesdits moyens de verrouillage étant débrayables par un mouvement angulaire dudit organe de commande (9).

2. Dispositif de commande manuelle selon la revendication 1, caractérisé en ce que ledit capteur de position (4) est logé dans ledit support (2) et comporte un curseur mobile axialement (13) pour déterminer ledit signal de position, ce curseur (13) étant couplé audit organe de commande (9) pour en suivre les mouvements axiaux par rapport audit support (2).

3. Dispositif de commande manuelle selon la revendication 2, caractérisé en ce que ledit capteur de position (4) est un potentiomètre sur le curseur (13) duquel peut être prélevée une tension représentant ledit signal de position.

4. Dispositif de commande manuelle selon l'une quelconque des revendications 1 à 3, caractérisé en ce que lesdits moyens de verrouillage unidirectionnel comprennent un cliquet (6) articulé sur ledit support (2) et une crémaillère (21) prévue axialement sur ledit organe de commande (9) pour coopérer avec ledit cliquet, celui-ci étant sollicité élastiquement à pénétrer dans la denture de ladite crémaillère, et en ce que le profil des dents (22) de ladite crémaillère est prévu pour autoriser l'échappement du cliquet par un mouvement de rotation limité dudit organe de commande (9) par rapport audit support (2).

5. Dispositif de commande manuelle suivant l'une quelconque des revendications précédentes, caractérisé en ce que ledit support (2) présente un corps de forme générale cylindrique monté coaxialement sur ledit levier (L) et en ce que ledit organe de commande (9) est une douille entourant coaxialement ledit corps cylindrique.

6. Dispositif de commande manuelle selon la revendication 5, caractérisé en ce qu'il comporte un unique organe élastique de rappel (18) pour ramener ladite douille (9) dans sa position de départ lorsqu'elle a été déplacée en direction dudit organe de manipulation (PO) ou autour de son axe (X-X) pour le débrayage desdits moyens de verrouillage unidirectionnel (6, 21).

7. Dispositif de commande manuelle selon l'une quelconque des revendications précédentes, caractérisé en ce que ledit levier (L) est le levier de changement de rapports de la boîte de vitesses d'un véhicule automobile et en ce que ledit organe fonctionnel est le frein de parking motorisé de ce véhicule.
